# NEUE EUROPÄISCHE PATENTSCHRIFT

(11) **EP 4 141 340 B2**
(45) Veröffentlichungstag und Bekanntmachung des Hinweises auf die Entscheidung über den Einspruch: **24.06.2026**
(45) Hinweis auf die Patenterteilung: 27.09.2023
(21) Anmeldenummer: 22201224.7
(22) Anmeldetag: 29.07.2020
(51) Int. Cl.: F24H 1/00, B60H 1/00, B60H 1/22, F24H 9/20, F24H 6/00, F23N 5/02

(54) **HEIZVORRICHTUNG**
HEATING DEVICE
DISPOSITIF DE CHAUFFAGE

(30) Priorität: 18.09.2019 DE 102019006554
(43) Veröffentlichungstag der Anmeldung: 01.03.2023
(62) Teilanmeldung aus: 20760768.0
(73) Patentinhaber: Truma Gerätetechnik GmbH & Co. KG, 85640 Putzbrunn (DE)
(72) Erfinder: WEISSENBACH, Victor, 85640 Putzbrunn (DE); STRÖHLE, Elmar, 85640 Putzbrunn (DE); REININGER, Dennis, 85640 Putzbrunn (DE); MARKESIC, Robert, 85640 Putzbrunn (DE); DEMMEL, Robert, 85640 Putzbrunn (DE)
(74) Vertreter: Prinz & Partner mbB

(56) Entgegenhaltungen:
- EP-A1- 1 717 514
- EP-A1- 2 492 607
- WO-A1-2019/038023
- WO-A1-96/28313
- DE-A1- 102006 036 432
- DE-A1- 102013 113 883
- JP-A- S60 142 154

## Beschreibung

Die Erfindung bezieht sich auf eine Heizvorrichtung, die zumindest dem Erwärmen von Luft (z. B. Raumluft) dient.

Im Stand der Technik sind Heizvorrichtungen bekannt, die durch das Verbrennen von Propan oder Butan thermische Energie erzeugen. Die Energie wird über Wärmetauscher auf Luft oder andere Fluide, z. B. Wasser, übertragen. Für den Brennvorgang und für das Ausbringen der erwärmten Luft sind jeweils Gebläse vorgesehen. Der Brennvorgang und vor allem das Arbeiten der Gebläse sind mit Geräuschbildung verbunden (siehe z. B. die DE 44 08 801 C2). Insbesondere während der Nachtzeit oder einer anderen Ruhezeit (z. B. während der Siesta) kann dies störend sein. Umso mehr kann sich die Geräuschkulisse negativ auswirken, wenn die Heizvorrichtung in einem beengten Raum, z. B. einem Wohnwagen, einem Wohnmobil oder einem Boot, zur Anwendung kommt. Dabei ist es in der Regel erwünscht, dass die Heizvorrichtung auch während der Nachtzeit betrieben wird, sodass ein Ausschalten der Heizvorrichtung keine Option darstellt. Daher sieht z. B. die DE 10 2006 036 432 A1 eine Herabsenkung der Gebläseleistung während eines Nachtbetriebs vor.

Die EP 2 954 647 B1 sieht beispielsweise einen Nachtmodus vor, in welchem ein Energieverbrauch einer Heizungs- oder Klimaanlage reduziert werden soll. Dabei soll ein solcher Nachtmodus ausgehend von den Daten eines Beschleunigungssensors eines Smartphone aktiviert werden.

Ferner sind Heizvorrichtungen aus der JP S60 142 154 A, der DE 10 2013 113 883 A1, der WO 96/28313 A1, der WO 2019/038023 A1, der EP 1 717 514 A1 sowie der EP 2 492 607 A1 bekannt.

Die der Erfindung zugrundeliegende Aufgabe besteht darin, eine Heizvorrichtung vorzuschlagen, die einen geräuschreduzierten Betrieb ermöglicht.

Die Erfindung löst die Aufgabe durch eine Heizvorrichtung mit den Merkmalen des Anspruchs 1. Erfindungsgemäß wird eine obere Leistungsstufe definiert, wobei die Heizvorrichtung nur in Leistungsstufen darunter betrieben werden kann. Da die Leistungsstufen mit zunehmendem Geräuschpegel einhergehen, wird somit ein zu hohes, d. h. zu lautes Leistungsniveau nicht angeboten. Es wird also mindestens eine Leistungsstufe - zumindest die stärkste Leistungsstufe - blockiert. Die Verbindung zwischen Geräuschpegel und Leistungsstufe ergibt sich dabei oft durch die Drehzahl des Verbrennungsluftmotors beim Zuführen der Verbrennungsluft zur Brennervorrichtung für den Brennvorgang.

Bei dem Brennstoff handelt es sich beispielweise um ein brennbares Gas (z. B. Propan oder Butan oder ein Gemisch) oder um Diesel. Die zu erwärmende Luft ist z. B. Raumluft. Dabei kommt die Heizvorrichtung beispielsweise in einem bewegbaren Innenraum, wie er z. B. durch Wohnwagen, Wohnmobile oder Boote gegeben ist, zur Anwendung.

Die Steuervorrichtung steuert die Heizvorrichtung über den Eingriff auf mindestens eine Komponente ausgehend von Parametersätzen. Dabei ist zumindest ein Parametersatz einem Nachtmodus zugeordnet, wobei die Vorgabe der Parameter mit einer Reduktion der Geräusche einhergeht, die von der Heizvorrichtung erzeugt werden. Im Nachtmodus ist die Heizvorrichtung somit leiser. Der Nachtmodus kann dabei natürlich auch tageszeitunabhängig aktiviert werden, sodass die Bezeichnung alternativ auch "Ruhemodus" sein kann. Der Nachtmodus unterscheidet sich somit in Bezug auf die erzeugten Geräusche von dem anderen Modus, welchem der Standard-Parametersatz zugeordnet ist. Dies wäre somit z. B. ein Tagesmodus.

Die Komponenten sind z. B. die Brennervorrichtung, das Verbrennungsluftgebläse oder das Umluftgebläse oder andere Komponenten der Heizvorrichtung, die sich auf die Geräuschbildung auswirken.

Im Folgenden werden Parameter beschrieben, die die Steuervorrichtung dem Nachtmodus-Parametersatz entnimmt und mit denen die Steuervorrichtung auf einzelne Komponenten der Heizvorrichtung einwirkt.

Eine Ausgestaltung besteht darin, dass die Steuervorrichtung derart ausgebildet ist, dem Nachtmodus-Parametersatz einen unteren Temperaturtoleranzwert zu entnehmen, dass in dem Fall, dass eine von der Heizvorrichtung abhängige Temperatur um mehr als der untere Temperaturtoleranzwert niedriger als ein vorgebbarer Temperatur-Sollwert ist, die Steuervorrichtung korrigierend auf die Heizvorrichtung einwirkt, und dass ein Betrag des unteren Temperaturtoleranzwerts größer als ein Betrag eines unteren Temperaturtoleranzwerts des Standard-Parametersatzes ist. In dieser Ausgestaltung wird die Schalthysterese der Heizvorrichtung - zumindest in Richtung des Unterschreitens einer Soll-Temperatur - vergrößert. Dafür werden größere Abweichungen einer von der Heizvorrichtung erzeugten Temperatur - insbesondere der Temperatur der von der Heizvorrichtung erwärmten Luft - toleriert, bevor auf die Heizvorrichtung steuernd eingewirkt wird, indem z. B. die Brennervorrichtung erneut gestartet wird. Durch diese größere Toleranz gegenüber dem Absinken der Temperatur wird die Anzahl der Brennvorgänge reduziert.

Eine Ausgestaltung besteht darin, dass die Steuervorrichtung derart ausgebildet ist, dem Nachtmodus-Parametersatz einen oberen Temperaturtoleranzwert zu entnehmen, dass in dem Fall, dass eine von der Heizvorrichtung abhängige Temperatur um mehr als der obere Temperaturtoleranzwert höher als ein vorgebbarer Temperatur-Sollwert ist, die Steuervorrichtung korrigierend auf die Heizvorrichtung einwirkt, und dass ein Betrag des oberen Temperaturtoleranzwerts größer als ein Betrag eines oberen Temperaturtoleranzwerts des Standard-Parametersatzes ist. In dieser Ausgestaltung wird die Schalthysterese der Heizvorrichtung - in Richtung des Überschreitens einer Soll-Temperatur - vergrößert. In dieser Ausgestaltung werden Temperaturen oberhalb der z. B. durch den Benutzer eingestellten Soll-Temperatur toleriert, die eine größere Differenz zum Sollwert aufweisen, als dies bei den Standard-Parametern üblich wäre. Das Einwirken auf die Heizvorrichtung ist dabei in einer Ausgestaltung das Beenden des Heizvorgangs. Es wird somit beispielsweise die Brennervorrichtung seltener ausgeschaltet als dies gemäß dem Standard-Parametersatz vorgesehen wäre.

Die Schalthysterese bezieht sich in einer Ausgestaltung insbesondere auf die Temperaturdifferenz zwischen einer Soll-Raumtemperatur und einer Ist-Raumtemperatur. Die Soll-Raumtemperatur kann beispielsweise durch einen Benutzer der Heizvorrichtung vorgegeben werden, wohingegen die Ist-Raumtemperatur beispielweise durch einen im Raum angeordneten Temperatursensor ermittelt wird. Die beiden vorgenannten Ausgestaltungen beziehen sich dabei entsprechend auf Abweichungen der Ist-Raumtemperatur oberhalb bzw. unterhalb der Soll-Raumtemperatur. Dabei werden im Nachmodus-Parametersatz größere Abweichungen als im Standard-Parametersatz toleriert.

Gemäß einer Ausgestaltung ist vorgesehen, dass die Steuervorrichtung derart ausgebildet ist, dem Nachtmodus-Parametersatz einen Temperaturtoleranzbereichzu entnehmen, dass in dem Fall, dass eine von der Heizvorrichtung abhängige Temperatur außerhalb des Temperaturtoleranzbereichs um einen vorgebbaren Temperatur-Sollwert liegt, die Steuervorrichtung korrigierend auf die Heizvorrichtung einwirkt, und dass ein Betrag des Temperaturtoleranzbereichs größer als ein Betrag eines Temperaturtoleranzbereichs des Standard-Parametersatzes ist. In dieser Ausgestaltung umfasst der Nachtmodus-Parametersatz ein größeres Toleranzband um einen Sollwert der Temperatur herum als der Standard-Parametersatz. Damit werden größere Abweichungen in positiver und negativer Richtung als im normalen Betrieb toleriert, bevor auf die Heizvorrichtung eingewirkt wird. Das Einwirken ist dabei beispielsweise das Unterbrechen bzw. das (Neu-)Starten eines Brennvorgangs. Durch den größeren Toleranzbereich wird ein ruhigerer Betrieb der Heizvorrichtung angestrebt. Wurde in den beiden vorgenannten Ausgestaltungen jeweils ein einzelner Toleranzwert für die Abweichung der Ist- von der Soll-Temperatur in positiver bzw. negativer Richtung beim Nachtmodus-Parametersatz verändert, so erfolgt in dieser Ausgestaltung beim Übergang vom Standardzum Nachmodus-Parametersatz eine komplette Verbreiterung eines Toleranzbandes an sich.

Erfindungsgemäß ist vorgesehen, dass die Heizvorrichtung in mehreren Leistungsstufen betreibbar ist, dass die Steuervorrichtung derart ausgebildet ist, dem Nachtmodus-Parametersatz einen oberen Temperaturgrenzwert zu entnehmen, und dass in dem Fall, dass eine von der Heizvorrichtung abhängige Temperatur um mehr als der obere Temperaturgrenzwert höher als ein vorgebbarer Temperatur-Sollwert ist, die Steuervorrichtung eine eingestellte Leistungsstufe der Heizvorrichtung auf eine schwächere Leistungsstufe reduziert und einen bestehenden Brennvorgang der Brennervorrichtung bestehen lässt. Die Heizvorrichtung kann in unterschiedlichen Leistungsstufen betrieben werden, zwischen denen je nach Ausgestaltung größere oder kleinere Leistungsabstände bestehen. Wird nun im Nachtmodus festgestellt, dass eine Soll-Temperatur oberhalb eines oberen Temperaturgrenzwerts überschritten wird, so ist vorgesehen, dass die eingestellte Leistungsstufe reduziert, aber ein Brennvorgang der Brennervorrichtung aufrechterhalten, d. h. insbesondere nicht beendet wird. Die von der Heizvorrichtung abhängige Temperatur ist in einer Ausgestaltung die Temperatur der aus der Heizvorrichtung abgeführten und insbesondere ausgeblasenen und somit auch erwärmten Luft. Im Gegensatz dazu ist in einer Ausgestaltung vorgesehen, dass gemäß dem Standard-Parametersatz bei Überschreiten des Temperatur-Sollwerts über einen entsprechenden Temperaturgrenzwert hinaus ein Brennvorgang beendet wird.

Bezieht sich eine Ausgestaltung beispielsweise auf einen Temperatur-Sollwert oder einen anderen eingestellten oder vorgegebenen Wert oder ein eingestellte Stufe, so ergibt sich dies vorzugsweise durch das Einwirken eines Benutzers, durch eine Voreinstellung oder ein anderes Einwirken auf die Heizvorrichtung.

Eine Ausgestaltung sieht vor, dass das Umluftgebläse in mehreren Leistungsstufen betreibbar ist, dass die Steuervorrichtung derart ausgebildet ist, dem Nachtmodus-Parametersatz eine Umluftgebläse-Leistungsstufe zu entnehmen, dass in dem Fall, dass erwärmte Luft aus der Heizvorrichtung auszubringen ist, die Steuervorrichtung das Umluftgebläse auf die Umluftgebläse-Leistungsstufe setzt, und dass es sich bei der Umluftgebläse-Leistungsstufe um die schwächste Leistungsstufe der Leistungsstufen des Umluftgebläses handelt. Die Heizvorrichtung dient somit während des Nachtmodus zumindest als Raumheizung und entsprechend zum Erwärmen von Luft. Für diesen Zweck muss die erwärmte Luft aus der Heizvorrichtung abgeführt werden, was über das Umluftgebläse geschieht. In dem Nachtmodus-Parametersatz ist nun vorgesehen, dass die Steuervorrichtung das Umluftgebläse maximal mit der geringsten Leistungsstufe, die in der Regel auch mit der geringsten Geräuschentwicklung verbunden ist, betreibt.

Eine Ausgestaltung besteht darin, dass die Steuervorrichtung derart ausgebildet ist, dem Nachtmodus-Parametersatz eine Beschleunigungszeitdauer zu entnehmen, dass in dem Fall, dass die Steuervorrichtung das Umluftgebläse auf eine vorgegebene Soll-Drehzahl erhöht, die Steuervorrichtung die Drehzahl innerhalb der Beschleunigungszeitdauer - beispielsweise von einer gegebenen Drehzahl - auf die vorgegebene Soll-Drehzahl erhöht, und dass die Beschleunigungszeitdauer größer als eine Beschleunigungszeitdauer des Standard-Parametersatzes ist. Mit anderen Worten: eine Drehzahl des Umluftgebläses wird im Nachtmodus langsamer erhöht als z. B. im Tagesmodus. Das Umluftgebläse führt die erwärmte Luft aus der Heizvorrichtung ab. In dieser Ausgestaltung wird die Drehzahl des Umluftgebläses im Nachtmodus langsamer erhöht als gemäß dem Standard-Parametersatz. Dies reduziert auch die Geräuschbildung.

Erfindungsgemäß ist vorgesehen, dass die Steuervorrichtung derart ausgebildet ist, dem Nachtmodus-Parametersatz ein Verbrennerstartschema zum Starten eines Brennvorgangs der Brennervorrichtung zu entnehmen und für das Starten eines Brennvorgangs zu verwenden, dass das Verbrennerstartschema des Nachtmodus zumindest folgende Schritte vorsieht: dass die Steuervorrichtung in einem Initialisierungsschritt - insbesondere als Teil des Nachtmodus oder als Teil eines vom Nachtmodus abweichenden Modus - die Drehzahl eines Motors des Verbrennungsluftgebläses solange variiert, bis in der Brennervorrichtung der Brennvorgang startet, dass die Steuervorrichtung die Drehzahl, bei welcher der Brennvorgang startet, als Vorgabewert in der Datenspeichervorrichtung abspeichert, und dass die Steuervorrichtung derart ausgebildet ist, bei einem Starten des Brennvorgangs im Nachtmodus den abgespeicherten Vorgabewert der Datenspeichervorrichtung zu entnehmen und die Drehzahl des Motors auf den Vorgabewert zu setzen, und dass gemäß einem Verbrennerstartschema des Standard-Parametersatzes die Steuervorrichtung bei jedem Starten des Brennvorgangs die Drehzahl des Motors solange variiert, bis in der Brennervorrichtung der Brennvorgang startet. Der Initialisierungsschritt ist je nach Ausgestaltung ein Schritt während des Nachtmodus oder ist ein Schritt, der während des vom Nachtmodus abweichenden Modus - vorzugsweise des Modus, dem der Standard-Parametersatz zugeordnet ist - ausgeführt wird. Gemäß dem Standard-Parametersatz wird in einer Ausgestaltung beim Starten eines Brennvorgangs die Drehzahl des Motors des Verbrennungsluftgebläses ausgehend von einem fest vorgegebenen Startwert herabgesetzt, bis der Brennvorgang startet. Im Nachtmodus wird im Gegensatz dazu ein Drehzahlwert eingestellt, mit dem vorhergehend ein Brennvorgang gestartet werden konnte.

Diese - aus dem vorherigen Betrieb und damit aus der konkreten Anwendungssituation heraus bekannte - Drehzahl ist in der Regel kleiner als der Startwert, der im Standard-Verbrennerstartschema vorgesehen ist. Somit werden während des Nachtmodus besonders hohe Drehzahlen vermieden. Der Ablauf gemäß dem Standard-Parametersatz ist beispielsweise beschrieben in der EP 2 116 771 B1.

In einer Ausgestaltung ist vorgesehen, dass der gemäß dem Verbrennerstartschema des Standard-Parametersatzes vorgegebene Startwerte der Drehzahl abhängig von der Temperatur (oder einem Temperaturbereich) der Verbrennungsluft ist. In dieser Ausgestaltung sind also mehrere-jeweils auf einen Temperaturwert bzw. einen Temperaturbereich bezogene - Startwerte oder ist ein funktioneller Zusammenhang zwischen Startwert und Temperatur der Verbrennungsluft hinterlegt. Ausgehend von dem gemessenen Temperaturwert wird dann der zugehörige Startwert verwendet, um die Drehzahl bis zum Starten des Brennvorgangs zu reduzieren.

Gemäß einer Ausgestaltung ist vorgesehen, dass die Steuervorrichtung derart ausgebildet ist, dem Nachtmodus-Parametersatz einen Absenkungswert zu entnehmen, und dass die Steuervorrichtung bei einer Steuerung der Brennervorrichtung auf einen vorgegebenen Temperatur-Sollwert die Brennervorrichtung auf den um den Absenkungswert reduzierten Temperatur-Sollwert steuert. In dieser Ausgestaltung wird somit die Heizvorrichtung nicht auf den eigentlich gewünschten oder durch einen Benutzer vorgegebenen Temperatur-Sollwert, sondern auf einen um den Absenkungswert verminderten Temperaturwert geregelt. Der - beispielsweise durch den Benutzer-vorgegebene Temperatur-Sollwert wird somit um den Absenkungswert herabgesetzt und dieser Wert wird dann zur Steuerung der Heizvorrichtung verwendet. Es wird somit eine geringere Temperatur angestrebt, weshalb auch eine geringere Temperaturdifferenz auszugleichen ist. Dies reduziert ebenfalls die Geräuschkulisse. Der Absenkungswert beträgt in einer Ausgestaltung beispielsweise 1 °C.

Eine Ausgestaltung besteht darin, dass ein Fluid-Behälter vorhanden ist, dass die Brennervorrichtung zusätzlich zum Erwärmen von Luft auch dem Erwärmen eines in dem Fluid-Behälter befindlichen Fluids dient, dass die Steuervorrichtung derart ausgebildet ist, dem Nachtmodus-Parametersatz eine Priorisierung zu entnehmen, und dass in dem Fall, dass gleichzeitig Luft und Fluid erwärmt werden sollen, die Steuervorrichtung in Abhängigkeit von der Priorisierung derartig auf die Komponente der Heizvorrichtung einwirkt, dass eine von der Brennervorrichtung erzeugte thermische Energie primär der Erwärmung der Luft oder der Erwärmung des Fluids dient. Das Fluid ist beispielsweise Wasser, z. B. Brauch- oder Nutzwasser. In dieser Ausgestaltung dient die Heizvorrichtung als eine Art von Raumheizung und auch als Fluid- oder Wassererhitzer. Bei dieser Doppelfunktion wird in dieser Ausgestaltung eine Wichtigkeit für das Erwärmen der Luft oder des Fluids vorgegeben. Dies kann insbesondere Auswirkungen auf die Zuführung des Brennstoffs haben, sodass hier z. B. das Öffnen bzw. Schließen eines (z. B. Gas-)Ventils seltener auftreten kann.

In einer Weiterführung der vorangehenden Ausgestaltung ist vorgesehen, dass die Priorisierung derartig ist, dass die thermische Energie primär der Erwärmung der Luft dient. In dieser Ausgestaltung ist somit im Nachtmodus in dem Fall, dass Luft und Fluid erwärmt werden sollen, die Erwärmung der Luft wichtiger. Damit werden z. B. Umschaltvorgänge vermieden, die z. B. auftreten, wenn zwar die eingestellte Temperatur des Fluids erreicht, aber die Lufttemperatur noch unter dem Sollwert liegt.

Eine Ausgestaltung besteht darin, dass die Steuervorrichtung derart ausgebildet ist, dem Nachtmodus-Parametersatz eine Anzeigeinformation zu entnehmen und an eine Anzeigeeinheit zur Darstellung zu übermitteln. Bei der Information handelt es sich beispielsweise um den Hinweis, dass ein Benutzer Klappen der Ausströmer der erwärmten Luft öffnen möge. Dies würde es erlauben, die Drehzahl des Umluftgebläses zu reduzieren, sodass sich ein leiserer und konstanter Betrieb der Heizvorrichtung einstellt.

Im Einzelnen gibt es eine Vielzahl von Möglichkeiten, die erfindungsgemäße Heizvorrichtung auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigt die:

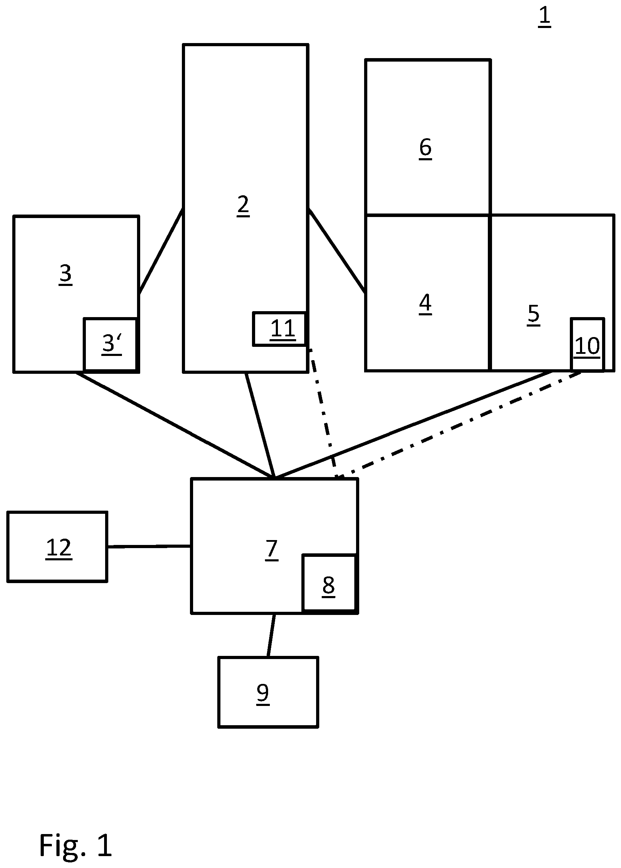

- Fig. 1: eine schematische Darstellung der Heizvorrichtung.

Die Fig. 1 zeigt schematisch die Komponenten einer beispielhaften Ausgestaltung einer Heizvorrichtung 1, die hier der Erwärmung von Luft und einem Fluid dient.

Die zentrale Komponente ist dabei die Brennervorrichtung 2, in welcher ein Gasluftgemisch verbrannt und die dabei entstehende thermische Energie auf die Luft, bei der es sich insbesondere um angesaugte Raumluft handelt, und auf das Fluid übertragen wird. Das Gasluftgemisch besteht dabei aus Verbrennungsluft und einem gasförmigen oder in einen gasförmigen Zustand versetzten Brennstoff. Die Zuführung des Brennstoffs sowie eine Brennstoffquelle (z. B. eine Gasflasche) sind für die Übersichtlichkeit nicht dargestellt. Die Zuführung der Verbrennungsluft geschieht durch das Verbrennungsluftgebläse 3. Der Motor 3' des Verbrennungsluftgebläses 3 wird dabei mit einer einstellbaren Drehzahl betrieben, wodurch die Luft angesaugt und der Brennervorrichtung 2 zugeführt wird.

Das von der Brennervorrichtung 2 erzeugte Rauchgas wird einem Wärmetauscher 4 zugeführt, um die thermische Energie auf die zu erwärmende Luft zu übertragen. Die erwärmte Luft wird dann über ein Umluftgebläse 5 aus der Heizvorrichtung 1 ausgebracht, um damit beispielsweise einen - hier nicht dargestellten - Innenraum zu erwärmen. Der Wärmetauscher 4 steht weiterhin in thermischer Wechselwirkung mit einem Fluid-Behälter 6. Bei dem - hier nicht dargestellten - Fluid handelt es sich beispielsweise um Brauchwasser.

Eine Steuervorrichtung 7 wirkt in der dargestellten Ausgestaltung auf das Verbrennungsluftgebläse 3, auf die Brennervorrichtung 2 und auf das Umluftgebläse 5 steuernd ein. Hierfür greift die Steuervorrichtung 7 auf eine Datenspeichervorrichtung 8 zu, in welcher wenigstens zwei unterschiedliche Parametersätze hinterlegt sind: Dies ist zum einen ein Standard-Parametersatz und zum anderen ein Nachtmodus-Parametersatz. Der Standard-Parametersatz ist beispielsweise einem üblichen Tagesmodus zugeordnet. In weiteren Ausgestaltungen sind noch zusätzliche Parametersätze vorhanden, die die Steuerung der Komponenten in weiteren Modi der Heizvorrichtung 1 beschreiben. Der Nachtmodus zeichnet sich insbesondere dadurch aus, dass eine von der Heizvorrichtung 1 erzeugte Geräuschkulisse möglichst reduziert ist. Es sollen also während der Nachtzeit störende Geräusche vermieden werden. Alternativ kann der Nachtmodus daher auch als Ruhemodus bezeichnet werden.

Für das Auslösen des Nachtmodus ist eine Eingabevorrichtung 9 vorgesehen, bei welcher es sich beispielsweise um ein Touch-Display handelt. Es ist jedoch auch jede beliebige Eingabemöglichkeit, z. B. über ein Smartphone realisierbar.

Für die Steuerung der Komponenten - und damit auch der Heizvorrichtung 1 - sind hier zwei Sensoren vorhanden: Dies ist zum einen ein Temperatursensor 10, der hier die Ermittlung der von der Heizvorrichtung 1 im Bereich des Umluftgebläses 5 erzeugten Temperatur ermöglicht. In einer Ausgestaltung wird beispielsweise die Temperatur der abgeführten Luft ermittelt. In einer alternativen oder ergänzenden Ausgestaltung dient der Temperatursensor 10 der Ermittlung der Temperatur des Fluid-Behälters 6. Da hier auch das Brennverhalten der Brennervorrichtung 2 gesteuert wird, ist zudem eine lonisationselektrode 11 vorhanden. Die Ionisationselektrode 11 dient dabei einer Spannungs- bzw. Strommessung als Indikator dafür, ob ein Brennvorgang stattfindet bzw. gestartet worden ist.

In einer alternativen - nicht dargestellten - Ausgestaltung sind zumindest vier Sensoren vorhanden, die jeweils eine Temperaturmessung erlauben. Dies sind ein Sensor für die Messung der Temperatur der Flüssigkeit; ein Sensor für die Messung der Temperatur der ausgeblasenen, also der von der Heizvorrichtung 1 erwärmten Luft; ein Sensor für die Temperatur der Raumluft, also der zu erwärmenden Luft; und ein Sensor für die Messung der Temperatur der Verbrennungsluft, mit der der Brennstoff für den Brennvorgang gemischt wird.

Zusätzlich ist noch eine Anzeigeeinheit 12 vorhanden, über die die Steuervorrichtung 7 Informationen für einen Benutzer ausgibt, deren Umsetzungen weitere Reduktionen der Geräuschkulisse bewirken können.

### Bezugszeichenliste

- **1**: Heizvorrichtung
- **2**: Brennervorrichtung
- **3**: Verbrennungsluftgebläse
- **3'**: Motor des Verbrennungsluftgebläses
- **4**: Wärmetauscher
- **5**: Umluftgebläse
- **6**: Fluid-Behälter
- **7**: Steuervorrichtung
- **8**: Datenspeichervorrichtung
- **9**: Eingabevorrichtung
- **10**: Temperatursensor
- **11**: Ionisationselektrode
- **12**: Anzeigeeinheit

## Patentansprüche

1. Heizvorrichtung (1),
mit einer Brennervorrichtung (2), einem Verbrennungsluftgebläse (3), einem Umluftgebläse (5), einer Steuervorrichtung (7) und einer Datenspeichervorrichtung (8),
wobei das Verbrennungsluftgebläse (3) der Brennervorrichtung (2) Verbrennungsluft zuführt,
wobei die Brennervorrichtung (2) ein Gasluftgemisch aus der Verbrennungsluft und einem gasförmigen oder in einen gasförmigen Zustand versetzten Brennstoff verbrennt,
wobei die Brennervorrichtung (2) mindestens dem Erwärmen von Luft dient, wobei das Umluftgebläse (5) erwärmte Luft aus der Heizvorrichtung (1) ausbringt, wobei die Steuervorrichtung (7) auf mindestens eine Komponente (2, 3, 3', 5, 12) der Heizvorrichtung (1) einwirkt,
wobei in der Datenspeichervorrichtung (8) mindestens ein Nachtmodus-Parametersatz, der einem Betrieb der Heizvorrichtung (1) in einem Nachtmodus zugeordnet ist, und ein Standard-Parametersatz, der einem Betrieb der Heizvorrichtung (1) in einem vom Nachtmodus abweichenden Modus zugeordnet ist, hinterlegt sind,
wobei die Steuervorrichtung (7) derart ausgebildet ist, nach einer Aktivierung des Nachtmodus auf den zugeordneten Nachtmodus-Parametersatz zu zugreifen und für das Einwirken auf die mindestens eine Komponente (2, 3, 3', 5, 12) zu verwenden,
wobei der Nachtmodus-Parametersatz eine Reduktion einer von der Heizvorrichtung (1) erzeugten Geräuschkulisse bewirkt,
**dadurch gekennzeichnet, dass**
die Heizvorrichtung (1) in mehreren Leistungsstufen betreibbar ist, wobei die Steuervorrichtung (7) derart ausgebildet ist, dem Nachtmodus-Parametersatz eine Grenz-Leistungsstufe zu entnehmen, und wobei die Steuervorrichtung (7) einen Betrieb der Heizvorrichtung (1) nur in einer Leistungsstufe zulässt, die geringer als die Grenz-Leistungsstufe ist,
wobei die Steuervorrichtung (7) derart ausgebildet ist, dem Nachtmodus-Parametersatz ein Verbrennerstartschema zum Starten eines Brennvorgangs der Brennervorrichtung (2) zu entnehmen und für das Starten eines Brennvorgangs zu verwenden,
wobei das Verbrennerstartschema des Nachtmodus zumindest folgende Schritte vorsieht:
dass die Steuervorrichtung (7) in einem Initialisierungsschritt - insbesondere als Teil des Nachtmodus oder als Teil eines vom Nachtmodus abweichenden Modus - die Drehzahl eines Motors (3') des Verbrennungsluftgebläses (3) solange variiert, bis in der Brennervorrichtung (2) der Brennvorgang startet,
dass die Steuervorrichtung (7) die Drehzahl, bei welcher der Brennvorgang startet, als Vorgabewert in der Datenspeichervorrichtung (8) abspeichert, und
dass die Steuervorrichtung (7) derart ausgebildet ist, bei einem Starten des Brennvorgangs im Nachtmodus den abgespeicherten Vorgabewert der Datenspeichervorrichtung (8) zu entnehmen und die Drehzahl des Motors (3') auf den Vorgabewert zu setzen, und
wobei gemäß einem Verbrennerstartschema des Standard-Parametersatzes die Steuervorrichtung (7) bei jedem Starten des Brennvorgangs die Drehzahl des Motors (3') solange variiert, bis in der Brennervorrichtung (2) der Brennvorgang startet.

2. Heizvorrichtung (1) nach Anspruch 1,
wobei die Steuervorrichtung (7) derart ausgebildet ist, dem Nachtmodus-Parametersatz einen unteren Temperaturtoleranzwert zu entnehmen,
wobei in dem Fall, dass eine von der Heizvorrichtung (1) abhängige Temperatur um mehr als der untere Temperaturtoleranzwert niedriger als ein vorgebbarer Temperatur-Sollwert ist, die Steuervorrichtung (7) korrigierend auf die Heizvorrichtung (1) einwirkt, und
wobei ein Betrag des unteren Temperaturtoleranzwerts größer als ein Betrag eines unteren Temperaturtoleranzwerts des Standard-Parametersatzes ist.

3. Heizvorrichtung (1) nach Anspruch 1 oder 2,
wobei die Steuervorrichtung (7) derart ausgebildet ist, dem Nachtmodus-Parametersatz einen oberen Temperaturtoleranzwert zu entnehmen,
wobei in dem Fall, dass eine von der Heizvorrichtung (1) abhängige Temperatur um mehr als der obere Temperaturtoleranzwert höher als ein vorgebbarer Temperatur-Sollwert ist, die Steuervorrichtung (7) korrigierend auf die Heizvorrichtung (1) einwirkt, und
wobei ein Betrag des oberen Temperaturtoleranzwerts größer als ein Betrag eines oberen Temperaturtoleranzwerts des Standard-Parametersatzes ist.

4. Heizvorrichtung (1) nach einem der Ansprüche 1 bis 3,
wobei die Steuervorrichtung (7) derart ausgebildet ist, dem Nachtmodus-Parametersatz einen Temperaturtoleranzbereich zu entnehmen,
wobei in dem Fall, dass eine von der Heizvorrichtung (1) abhängige Temperatur außerhalb des Temperaturtoleranzbereichs um einen vorgebbaren Temperatur-Sollwert liegt, die Steuervorrichtung (7) korrigierend auf die Heizvorrichtung (1) einwirkt, und
wobei ein Betrag des Temperaturtoleranzbereichs größer als ein Betrag eines Temperaturtoleranzbereichs des Standard-Parametersatzes ist.

5. Heizvorrichtung (1) nach einem der Ansprüche 1 bis 4,
wobei die Heizvorrichtung (1) in mehreren Leistungsstufen betreibbar ist,
wobei die Steuervorrichtung (7) derart ausgebildet ist, dem Nachtmodus-Parametersatz einen oberen Temperaturgrenzwert zu entnehmen, und
wobei in dem Fall, dass eine von der Heizvorrichtung (1) abhängige Temperatur um mehr als der obere Temperaturgrenzwert höher als ein vorgebbarer Temperatur-Sollwert ist, die Steuervorrichtung (7) eine eingestellte Leistungsstufe der Heizvorrichtung (1) auf eine schwächere Leistungsstufe reduziert und einen bestehenden Brennvorgang der Brennervorrichtung (2) bestehen lässt.

6. Heizvorrichtung (1) nach einem der Ansprüche 1 bis 5,
wobei das Umluftgebläse (5) in mehreren Leistungsstufen betreibbar ist,
wobei die Steuervorrichtung (7) derart ausgebildet ist, dem Nachtmodus-Parametersatz eine Umluftgebläse-Leistungsstufe zu entnehmen,
wobei in dem Fall, dass erwärmte Luft aus der Heizvorrichtung (1) auszubringen ist, die Steuervorrichtung (7) das Umluftgebläse (5) auf die Umluftgebläse-Leistungsstufe setzt, und
wobei es sich bei der Umluftgebläse-Leistungsstufe um die schwächste Leistungsstufe der mehreren Leistungsstufen des Umluftgebläses (5) handelt.

7. Heizvorrichtung (1) nach einem der Ansprüche 1 bis 6,
wobei die Steuervorrichtung (7) derart ausgebildet ist, dem Nachtmodus-Parametersatz eine Beschleunigungszeitdauer zu entnehmen,
wobei in dem Fall, dass die Steuervorrichtung (7) das Umluftgebläse (5) auf eine vorgegebene Soll-Drehzahl erhöht, die Steuervorrichtung (7) die Drehzahl innerhalb der Beschleunigungszeitdauer auf die vorgegebene Soll-Drehzahl erhöht, und
wobei die Beschleunigungszeitdauer größer als eine Beschleunigungszeitdauer des Standard-Parametersatzes ist.

8. Heizvorrichtung (1) nach einem der Ansprüche 1 bis 7,
wobei die Steuervorrichtung (7) derart ausgebildet ist, dem Nachtmodus-Parametersatz einen Absenkungswert zu entnehmen, und
wobei die Steuervorrichtung (7) bei einer Steuerung der Brennervorrichtung (2) auf einen vorgegebenen Temperatur-Sollwert die Brennervorrichtung (2) auf den um den Absenkungswert reduzierten Temperatur-Sollwert steuert.

9. Heizvorrichtung (1) nach einem der Ansprüche 1 bis 8,
wobei ein Fluid-Behälter (6) vorhanden ist,
wobei die Brennervorrichtung (2) zusätzlich zum Erwärmen von Luft auch dem Erwärmen eines in dem Fluid-Behälter (6) befindlichen Fluids dient,
wobei die Steuervorrichtung (7) derart ausgebildet ist, dem Nachtmodus-Parametersatz eine Priorisierung zu entnehmen, und
wobei in dem Fall, dass gleichzeitig Luft und Fluid erwärmt werden sollen, die Steuervorrichtung (7) in Abhängigkeit von der Priorisierung derartig auf die Komponente der Heizvorrichtung (1) einwirkt, dass eine von der Brennervorrichtung (2) erzeugte thermische Energie primär der Erwärmung der Luft oder der Erwärmung des Fluids dient.

10. Heizvorrichtung (1) nach Anspruch 9,
wobei die Priorisierung derartig ist, dass die thermische Energie primär der Erwärmung der Luft dient.

11. Heizvorrichtung (1) nach einem der Ansprüche 1 bis 10,
wobei die Steuervorrichtung (7) derart ausgebildet ist, dem Nachtmodus-Parametersatz eine Anzeigeinformation zu entnehmen und an eine Anzeigeeinheit (12) zur Darstellung zu übermitteln.

## Claims

1. A heater (1),
comprising a burner device (2), a combustion air blower (3), a circulating air blower (5), a control device (7) and a data storage device (8),
wherein the combustion air blower (3) feeds combustion air to the burner device (2),
wherein the burner device (2) burns a gas-air mixture consisting of the combustion air and a gaseous fuel or a fuel converted into a gaseous state,
wherein the burner device (2) at least serves for the heating of air,
wherein the circulating air blower (5) discharges heated air from the heater (1),
wherein the control device (7) acts on at least one component (2, 3, 3', 5, 12) of the heater (1),
wherein at least one night mode parameter set associated with an operation of the heater (1) in a night mode and a default parameter set associated with an operation of the heater (1) in a mode different from the night mode are stored in the data storage device (8),
wherein the control device (7) is configured to access the associated night mode parameter set and use it for acting on the at least one component (2, 3, 3', 5, 12) after activation of the night mode,
wherein the night mode parameter set effects a reduction of a background noise generated by the heater (1),
**characterized in that**
the heater (1) can be operated at a plurality of power levels, wherein the control device (7) is configured to take a limit power level from the night mode parameter set, and wherein the control device (7) permits operation of the heater (1) only at a power level which is lower than the limit power level,
wherein the control device (7) is configured to take a burner start scheme from the night mode parameter set for starting a burning process of the burner device (2) and use said scheme for starting a burning process,
wherein the burner start scheme of the night mode provides at least the following steps:
that in an initialization step - in particular as part of the night mode or as part of a mode different from the night mode - the control device (7) varies the speed of a motor (3') of the combustion air blower (3) until the burning process starts in the burner device (2),
that the control device (7) stores the speed at which the burning process starts as a default value in the data storage device (8), and
that the control device (7) is configured to take the stored default value from the data storage device (8) when the burning process is started in the night mode and to set the speed of the motor (3') to the default value, and
wherein according to a burner start scheme of the default parameter set the control device (7) varies the speed of the motor (3') at each start of the burning process until the burning process starts in the burner device (2).

2. The heater (1) according to claim 1,
wherein the control device (7) is configured to take a lower temperature tolerance value from the night mode parameter set,
wherein in the case that a temperature dependent on the heater (1) is lower than a specifiable temperature setpoint value by more than the lower temperature tolerance value, the control device (7) acts on the heater (1) in a correcting manner, and
wherein an amount of the lower temperature tolerance value is greater than an amount of a lower temperature tolerance value of the default parameter set.

3. The heater (1) according to claim 1 or 2,
wherein the control device (7) is configured to take an upper temperature tolerance value from the night mode parameter set,
wherein in the case that a temperature dependent on the heater (1) is higher than a specifiable temperature setpoint value by more than the upper temperature tolerance value, the control device (7) acts on the heater (1) in a correcting manner, and
wherein an amount of the upper temperature tolerance value is greater than an amount of an upper temperature tolerance value of the default parameter set.

4. The heater (1) according to any of claims 1 to 3,
wherein the control device (7) is configured to take a temperature tolerance range from the night mode parameter set,
wherein in the case that a temperature dependent on the heater (1) lies outside the temperature tolerance range around a specifiable temperature setpoint value, the control device (7) acts on the heater (1) in a correcting manner, and
wherein an amount of the temperature tolerance range is greater than an amount of a temperature tolerance range of the default parameter set.

5. The heater (1) according to any of claims 1 to 4,
wherein the heater (1) can be operated at a plurality of power levels,
wherein the control device (7) is configured to take an upper temperature limit value from the night mode parameter set, and
wherein in the case that a temperature dependent on the heater (1) is higher than a specifiable temperature setpoint value by more than the upper temperature limit value, the control device (7) reduces a set power level of the heater (1) to a weaker power level and maintains an existing burning process of the burner device (2).

6. The heater (1) according to any of claims 1 to 5,
wherein the circulating air blower (5) can be operated at a plurality of power levels,
wherein the control device (7) is configured to take a circulating air blower power level from the night mode parameter set,
wherein in the case that heated air is to be discharged from the heater (1), the control device (7) sets the circulating air blower (5) to the circulating air blower power level, and
wherein the circulating air blower power level is the weakest power level of the plurality of power levels of the circulating air blower (5).

7. The heater (1) according to any of claims 1 to 6,
wherein the control device (7) is configured to take an acceleration time period from the night mode parameter set,
wherein in the case that the control device (7) increases the circulating air blower (5) to a specified setpoint speed, the control device (7) increases the speed to the specified setpoint speed within the acceleration time period, and
wherein the acceleration time period is greater than an acceleration time period of the default parameter set.

8. The heater (1) according to any of claims 1 to 7,
wherein the control device (7) is configured to take a reduction value from the night mode parameter set, and
wherein on control of the burner device (2) to a specified temperature setpoint value, the control device (7) controls the burner device (2) to the temperature setpoint value reduced by the reduction value.

9. The heater (1) according to any of claims 1 to 8,
wherein a fluid container (6) is present,
wherein the burner device (2) serves for the heating of air and additionally also for heating a fluid contained in the fluid container (6),
wherein the control device (7) is configured to take a prioritization from the night mode parameter set, and
wherein in the case that air and fluid are to be heated at the same time, the control device (7) acts on the component of the heater (1) in dependence on the prioritization such that a thermal energy generated by the burner device (2) primarily serves for heating the air or for heating the fluid.

10. The heater (1) according to claim 9,
wherein the prioritization is such that the thermal energy primarily serves for heating the air.

11. The heater (1) according to any of claims 1 to 10,
wherein the control device (7) is configured to take a display information from the night mode parameter set and to transmit it to an indicating unit (12) for display.

## Revendications

1. Dispositif de chauffage (1),
comprenant un dispositif brûleur (2), une soufflante d'air de combustion (3), une soufflante d'air ambiant (5), un dispositif de commande (7) et un dispositif de stockage de données (8),
la soufflante d'air de combustion (3) alimentant le dispositif brûleur (2) en air de combustion,
le dispositif brûleur (2) brûlant un mélange d'air et de gaz de l'air de combustion et d'un combustible gazeux ou amené dans un état gazeux,
le dispositif brûleur (2) servant au moins à chauffer de l'air,
la soufflante d'air ambiant (5) évacuant de l'air chauffé hors du dispositif de chauffage (1),
le dispositif de commande (7) agissant sur au moins un composant (2, 3, 3', 5, 12) du dispositif de chauffage (1),
au moins un jeu de paramètres de mode nocturne associé à un fonctionnement du dispositif de chauffage (1) en mode nocturne, et un jeu de paramètres standard associé à un fonctionnement du dispositif de chauffage (1) selon un mode différent du mode nocturne, étant stockés dans le dispositif de stockage de données (8),
le dispositif de commande (7) étant réalisé de manière à accéder au jeu de paramètres de mode nocturne associé après l'activation du mode nocturne et à l'utiliser pour agir sur ledit au moins un composant (2, 3, 3', 5, 12),
le jeu de paramètres de mode nocturne provoquant une réduction d'un bruitage généré par le dispositif de chauffage (1),
**caractérisé en ce que**
le dispositif de chauffage (1) est apte à être opéré selon plusieurs niveaux de puissance, le dispositif de commande (7) étant réalisé de manière à prélever un niveau de puissance limite sur le jeu de paramètres de mode nocturne, et le dispositif de commande (7) permettant un fonctionnement du dispositif de chauffage (1) uniquement selon un niveau de puissance qui est plus faible que le niveau de puissance limite,
le dispositif de commande (7) étant réalisé de manière à prélever un schéma de démarrage de brûleur sur le jeu de paramètres de mode nocturne pour démarrer une procédure de combustion du dispositif brûleur (2) et à l'utiliser pour démarrer une procédure de combustion,
le schéma de démarrage de brûleur du mode nocturne prévoyant au moins les étapes suivantes :
le dispositif de commande (7) modifie la vitesse de rotation d'un moteur (3') de la soufflante d'air de combustion (3) dans une étape d'initialisation - en particulier en tant que partie du mode nocturne ou en tant que partie d'un mode différent du mode nocturne - jusqu'à ce que la procédure de combustion dans le dispositif brûleur (2) débute,
le dispositif de commande (7) mémorise la vitesse de rotation, à partir de laquelle la procédure de combustion débute, en tant que valeur prédéfinie dans le dispositif de stockage de données (8), et
le dispositif de commande (7) est réalisé de manière à prélever la valeur prédéfinie stockée sur le dispositif de stockage de données (8) lors du démarrage de la procédure de combustion dans le mode nocturne et à régler la vitesse de rotation du moteur (3') à la valeur prédéfinie, et
le dispositif de commande (7) modifiant la vitesse de rotation du moteur (3') à chaque démarrage de la procédure de combustion conformément à un schéma de démarrage de brûleur du jeu de paramètres standard jusqu'au démarrage de la procédure de combustion dans le dispositif brûleur (2).

2. Dispositif de chauffage (1) selon la revendication 1,
le dispositif de commande (7) étant réalisé de manière à prélever une valeur de tolérance de température inférieure sur le jeu de paramètres de mode nocturne,
au cas où une température qui dépend du dispositif de chauffage (1) est inférieure, de plus de la valeur de tolérance de température inférieure, à une valeur de consigne de température prédéfinissable, le dispositif de commande (7) agissant de manière corrective sur le dispositif de chauffage (1), et
une grandeur de la valeur de tolérance de température inférieure étant supérieure à une grandeur d'une valeur de tolérance de température inférieure du jeu de paramètres standard.

3. Dispositif de chauffage (1) selon la revendication 1 ou 2,
le dispositif de commande (7) étant réalisé de manière à prélever une valeur de tolérance de température supérieure sur le jeu de paramètres de mode nocturne,
au cas où une température qui dépend du dispositif de chauffage (1) est supérieure, de plus de la valeur de tolérance de température supérieure, à une valeur de consigne de température prédéfinissable, le dispositif de commande (7) agissant de manière corrective sur le dispositif de chauffage (1), et
une grandeur de la valeur de tolérance de température supérieure étant supérieure à une grandeur d'une valeur de tolérance de température supérieure du jeu de paramètres standard.

4. Dispositif de chauffage (1) selon l'une des revendications 1 à 3,
le dispositif de commande (7) étant réalisé de manière à prélever une plage de tolérance de température sur le jeu de paramètres de mode nocturne,
au cas où une température qui dépend du dispositif de chauffage (1) se trouve hors de la plage de tolérance de température d'une valeur de consigne de température prédéfinissable, le dispositif de commande (7) agissant de manière corrective sur le dispositif de chauffage (1), et
une grandeur de la plage de tolérance de température étant supérieure à une grandeur d'une plage de tolérance de température du jeu de paramètres standard.

5. Dispositif de chauffage (1) selon l'une des revendications 1 à 4,
le dispositif de chauffage (1) étant apte à être opéré selon plusieurs niveaux de puissance,
le dispositif de commande (7) étant réalisé de manière à prélever une valeur limite de température supérieure sur le jeu de paramètres de mode nocturne, et
au cas où une température qui dépend du dispositif de chauffage (1) est supérieure, de plus de la valeur limite de température supérieure, à une valeur de consigne de température prédéfinissable, le dispositif de commande (7) réduisant un niveau de puissance réglé du dispositif de chauffage (1) à un niveau de puissance plus faible et laissant durer une procédure de combustion existante du dispositif brûleur (2).

6. Dispositif de chauffage (1) selon l'une des revendications 1 à 5,
la soufflante d'air ambiant (5) étant apte à être opérée selon plusieurs niveaux de puissance,
le dispositif de commande (7) étant réalisé de manière à prélever un niveau de puissance de soufflante d'air ambiant sur le jeu de paramètres de mode nocturne,
au cas où de l'air chauffé doit être évacué du dispositif de chauffage (1), le dispositif de commande (7) réglant la soufflante d'air ambiant (5) au niveau de puissance de soufflante d'air ambiant, et
le niveau de puissance de soufflante d'air ambiant étant le niveau de puissance le plus faible parmi les plusieurs niveaux de puissance de la soufflante d'air ambiant (5).

7. Dispositif de chauffage (1) selon l'une des revendications 1 à 6,
le dispositif de commande (7) étant réalisé de manière à prélever une durée d'accélération sur le jeu de paramètres de mode nocturne,
au cas où le dispositif de commande (7) augmente la soufflante d'air ambiant (5) à une vitesse de rotation de consigné prédéfinie, le dispositif de commande (7) augmentant la vitesse de rotation à la vitesse de rotation de consigne prédéfinie en l'espace de la durée d'accélération, et
la durée d'accélération étant supérieure à une durée d'accélération du jeu de paramètres standard.

8. Dispositif de chauffage (1) selon l'une des revendications 1 à 7,
le dispositif de commande (7) étant réalisé de manière à prélever une valeur d'abaissement sur le jeu de paramètres de mode nocturne, et
le dispositif de commande (7), lors d'une commande du dispositif brûleur (2) à une valeur de consigne de température prédéfinie, commandant le dispositif brûleur (2) à la valeur de consigne de température réduite de la valeur d'abaissement.

9. Dispositif de chauffage (1) selon l'une des revendications 1 à 8,
un récipient de fluide (6) étant présent,
le dispositif brûleur (2) servant aussi à chauffer un fluide se trouvant dans le récipient de fluide (6) en plus du chauffage d'air,
le dispositif de commande (7) étant réalisé de manière à prélever une priorisation sur le jeu de paramètres de mode nocturne, et
au cas où de l'air et du fluide doivent être chauffés simultanément, le dispositif de commande (7) agissant sur le composant du dispositif de chauffage (1) en fonction de la priorisation de sorte qu'une énergie thermique produite par le dispositif brûleur (2) sert en premier lieu à chauffer l'air ou à chauffer le fluide.

10. Dispositif de chauffage (1) selon la revendication 9,
la priorisation étant telle que l'énergie thermique sert en premier lieu à chauffer l'air.

11. Dispositif de chauffage (1) selon l'une des revendications 1 à 10,
le dispositif de commande (7) étant réalisé de manière à prélever une information d'affichage sur le jeu de paramètres de mode nocturne et à la transmettre pour une représentation à une unité d'affichage (12).
